Europäisches Patentamt

European Patent Office

Office européen des brevets

(11) Veröffentlichungsnummer: **0 252 428**
**A2**

(12) # EUROPÄISCHE PATENTANMELDUNG

(21) Anmeldenummer: 87109483.5

(51) Int. Cl.⁴: **B64F 1/22**

(22) Anmeldetag: 01.07.87

(30) Priorität: 09.07.86 DE 3623005

(43) Veröffentlichungstag der Anmeldung:
**13.01.88 Patentblatt 88/02**

(84) Benannte Vertragsstaaten:
**DE ES FR GB IT**

(71) Anmelder: **Hydro-Gerätebau GmbH & Co. KG
Hebezeuge
Industriegebiet
D-7616 Biberach/Baden(DE)**

(72) Erfinder: **Scharsig, Hans-Hermann
Drehersacker 11
D-7600 Offenburg(DE)**

(74) Vertreter: **Patentanwälte Dipl.-Ing. Hans
Schmitt Dipl.-Ing. Wolfgang Maucher
Dreikönigstrasse 13
D-7800 Freiburg i.Br.(DE)**

(54) **Radwechsel-Heber für Flugzeuge.**

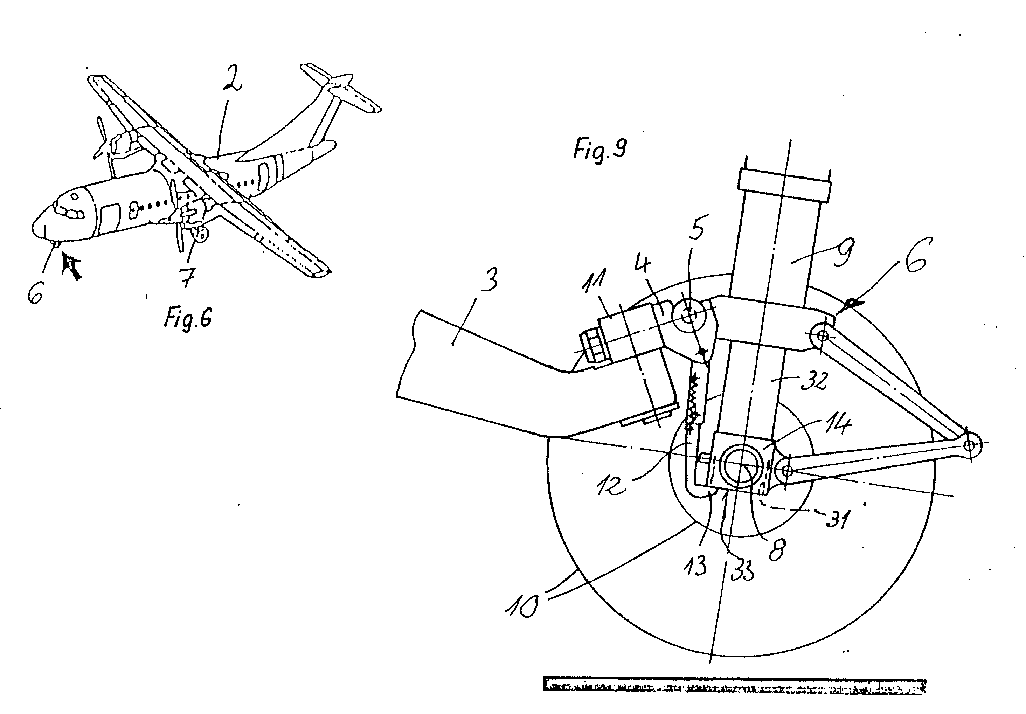

(57) Ein Radwechsel-Heber (1) für Flugzeuge (2) hat in üblicher Weise einen Hubarm (3) od.dgl., der ein Angriffselement (4) zum Untergreifen eines entsprechenden Angriffsteiles (5) an dem oder den Fahrwerken (6,7) des Flugzeuges (2) aufweist. Für den Angriff an einem außerhalb der Achse (8) des Fahrwerkes (6) befindlichen Angriffsteil (5) ist dabei ein Aufsatzstück (11) mit dem zu dem Angriffsteil (5) passenden, vorzugsweise hakenförmigen Angriffselement (4) an dem Hubarm (3) oder Hubrüssel des Hebers (1) vorgesehen. Das Angriffselement (4) weist dabei zusätzlich eine an ihm befestigte, bevorzugt ebenfalls hakenförmige Blockiervorrichtung (12) für den Stoßdämpfer (9) des Fahrwerkes (6) auf, um ein weiteres Ausfahren der Kolbenstange (32) des Stoßdämpfers (9) beim Anheben des Fahrwerkes (6) auszuschließen. Separate Blockierteile für den Stoßdämpfer (9), die unabhängig von dem Heber (1) angebracht werden müßten, werden also vermieden (Fig.9).

Fig 9

## Radwechsel-Heber für Flugzeuge

Die Erfindung betrifft einen Radwechsel-Heber für Flugzeuge mit einem Hubarm od.dgl., der ein Angriffselement zum Untergreifen eines entsprechenden Angriffsteiles an dem/ den Fahrwerken des Flugzeuges aufweist.

Derartige Radwechsel-Heber sind bekannt. In der Regel hat der mit Hilfe einer Hydraulik hochschwenkbare Hubarm an seinem freien Armende ein Angriffselement mit einer kugeligen oder halbkugeligen Ausnehmung, um unmittelbar am Fahrwerk ein entsprechend kugelig ausgebildeter Angriffsteil untergreifen zu können. Vor allem beim Anheben von Fahrwerken, deren Reifen keine Luft mehr enthalten, muß dabei ein geringer Bodenabstand zwischen dem Angriffsteil des Fahrwerkes und dem Boden berücksichtigt werden können.

Aus diesem Grunde kann insbesondere bei einem Bugfahrwerk das Angriffselement möglicherweise auch außerhalb der Achse des Fahrwerkes und dabei insbesondere höher als diese Achse angeordnet sein, wie es beispielsweise bei dem Flugzeugtyp ATR 42 (Aerospatiale) vorgesehen ist.

Der Erfindung liegt die Aufgabe zugrunde, ein Radwechsel-Heber der eingangs erwähnten Art zu schaffen, mit dem auch solche außerhalb der Achse des Fahrwerkes befindliche Angriffsteile eines Flugzeug-Fahrwerkes erfaßt werden können, ohne daß beim Anheben des Fahrwerkes durch die dadurch erfolgende Entlastung das Stoßdämpfer-Federelement in Gegenrichtung nachgibt, so daß die Räder nicht vom Boden freikommen. Dabei sollen aber für das Blockieren des Stoßdämpfers keine selbständigen, am Stoßdämpfer anzuordnenden Teile notwendig sein, die nach der Montagetätigkeit vergessen werden könnten.

Die Lösung dieser Aufgabe besteht im wesentlichen darin, daß für den Angriff an dem den nicht gefederten Teil des Fahrwerkes beaufschlagenden Angriffsteil ein Aufsatzstück mit dem zu dem Angriffsteil passenden Angriffselement an dem Hubarm oder Hubrüssel vorgesehen ist und daß das Angriffselement zusätzlich eine an ihm befestigte Blockiervorrichtung für den Stoßdämpfer der Fahrwerkes aufweist.

Besonders zweckmäßig ist es, wenn die Blockiervorrichtung für den Stoßdämpfer ein am Angriffselement vorzugsweise schwenkbar angelenkter Blockierhaken od.dgl. ist, der mit seinem Hakenvorsprung das am Fahrwerk bzw. der Räderlagerung angreifende untere, ausfahrbare Teil des Stoßdämpfers insbesondere formschlüssig untergreift. Befindet sich dieser Blockierhaken in Gebrauchsstellung, kann in üblicher Weise das Fahrwerk angehoben werden, ohne daß der Stoßdämpfer entgegen der Anheberichtung ausfahren und so das Rad weiter am Boden halten kann. Besondere, eine solche Bewegung des Stoßdämpfers verhindernde separate Teile werden vermieden. Darüberhinaus genügt für diese Betätigung eine einzige Bedienungsperson, wenn Blockierhaken und Angriffselement in zu den Abmessungen des unteren Endes des Stoßdämpfers einerseits und der Anordnung des Angriffsteiles am Fahrwerk andererseits passender Position zueinander angeordnet sind.

Das Angriffselement zum Untergreifen eines außerhalb der Fahrwerkachse befindlichen, vorzugsweise bolzenartigen Angriffsteiles kann als Lasthaken ausgebildet sein, unter dessen nach oben offener Hakenöffnung der Blockierhaken für den Stoßdämpfer befestigt sein kann. Auf diese Weise erfolgt die Kupplung zwischen Angriffselement und Angriffsteil durch eine Anhebebewegung des Hubarmes, bis die Hakenöffnung des Lasthakens den etwa horizontalen bolzenartigen Angriffsteil von unten her umfaßt. In vorteilhafter Weise kann dieselbe Anhebebewegung dazu ausgenutzt werden, auch den Blockierhaken mit seinem Hakenvorsprung von unten her an dem unteren Ende des Stoßdämpfers einzuhaken, was die - schon erwähnte Bedienung durch nur eine einzige Person erleichtert. Um die sehr geringen Bodenabstände eines Fahrwerkes mit platten Reifen mit Sicherheit mit dem erfindungsgemäßen Radwechsel-Heber unterfahren zu können, ist es vorteilhaft, wenn der Blockierhaken in seiner Längsrichtung wenigstens einmal durch ein gegenüber seiner gestreckten Lage in Richtung des Hakenvorsprunges wirksames Gelenk unterteilt ist. Auf diese Weise kann der Haken beim Unterfahren der Angriffsstelle zunächst abgeknickt sein, wobei jedoch sein Hakenvorsprung dennoch nach oben und somit gegen die Unterseite des Endes des Stoßdämpferrohres gerichtet sein kann. Befindet sich dann der Lasthaken in der richtigen Position unterhalb des Angriffsteiles des Fahrwerkes, wird beim Anheben dieses Lasthakens und des Angriffsteiles zunächst der Blockierhaken aus seiner abgeknickten Position in seine gestreckte Lage gebracht, in der er dann ein weiteres Ausweichen des Stoßdämpfers nach unten in gewünschter Weise blockiert.

Um das Abknicken und Halten des Hakens in abgeknickter Lage, aber auch das Zurückschwenken in gestreckter Lage zu vereinfachen und zu automatisieren, ist es vorteilhaft, wenn die beiden beidseits des Gelenkes befindlichen Teile des Blockierhakens durch eine Feder, vorzugsweise eine Zugfeder od.dgl. verbunden sind, wobei eine Verbindungslinie der beiden Befestigungsstellen der Zugfeder bei gestrecktem Haken vorzugsweise auf der der Klapprichtung abgewandten Seite des Gelenkes angeordnet ist.

Dadurch hält die Zugfeder den Haken sowohl in der gestreckten als auch in der geknickten Lage jeweils durch ihre Zugkraft fest, weil die größte Zugkraft auftritt, wenn beim Knicken die Zugfeder genau über das Gelenk verläuft, also zwischen den beiden Endlagen angeordnet ist. Somit kann die Zugfeder den Haken auch in der geknickten Position halten, so daß er beim Unterfahren eines stark abgesenkten Fahrwerkes dennoch in seine Position gelangen kann, ohne daß eine Bedienungsperson ihn festhalten muß.

Der Blockierhaken kann an seiner Anlenkstelle an dem als Angriffselement dienenden Lasthaken od.dgl. gegen eine an der seinem Hakenvorsprung abgewandten Rückseite angreifende Stützfeder abgestützt und von dieser in einer solchen schrägen Ausgangslage gehalten sein, daß der Hakenvorsprung in Orientierungsrichtung des Hubarmes vor der Anlenkstelle des Blockierhakens und tiefer als dieser angeordnet ist. Somit gelangt der Blockierhaken beim Unterfahren des Fahrwerkes noch vor dem Lasthaken unter den zu untergreifenden Bereich des Fahrwerkes, nämlich das Ende des Stoßdämpferrohres und kann beim weiteren Unterfahren des Fahrwerkes, bis auch der Lasthaken od.dgl. sich unter dem Angriffsteil des Fahrwerkes befindet, gegen die Kraft der Feder nachgeben. Dadurch braucht die gegenseitige Zuordnung der beiden Haken und auch der Angriffsstellen am Fahrwerk nicht so genau zu sein, weil nämlich gewisse Maßungenauigkeiten durch die Federwege ausgeglichen werden können. Auf diese Weise wird sichergestellt, daß der Blockierhaken in jedem Falle das Stoßdämpferrohr untergreift und den Stoßdämpfer blockiert, wenn der Lasthaken den entsprechenden Angriffspunkt am Fahrwerk beaufschlagt. Dabei sei erwähnt, daß der Lasthaken gegebenenfalls auch in an sich bekannter Weise wie eine Kugelpfanne, das heißt mit einer ringsum geschlossenen Hakenöffnung ausgebildet sein könnte.

Zweckmäßigerweise ist die Stützfeder für den Blockierhaken eine im Bereich des Schwenklagers des Blockierhakens an dem Angriffselement fixierte Blattfeder.

Um den relativ großen Gewichtskräften besser gerecht werden zu können, können an solchen Fahrwerken gegebenenfalls zwei beabstandende Angriffsstellen an dem entsprechenden bolzenartigen Angriffsteil vorgesehen sein. In diesem Falle können zwei parallele Lasthaken mit Abstand zueinander an dem Aufsatzstück vorgesehen sein, und der Blockierhaken kann in diesem Falle in besonders günstiger und vorteilhafter Weise im Zwischenraum der beiden Haken unterhalb deren Hakenöffnung vorzugsweise schwenkbar befestigt sein. Es ergibt sich dann ein symmetrischer Kraftangriff am Fahrwerk und auch an dem in der Regel etwa in der Mitte angreifenden Stoßdämpfer.

Eine besonders günstige Ausführungsform der Erfindung, die die Benutzung auch schon bisher vorhandener Radwechsel-Heber erlauben kann, kann darin bestehen, daß das Aufsatzstück mit dem Lasthaken an dem Hubarm des Radwechsel-Hebers lösbar mittels eines Steckbolzens in einer vorzugsweise etwa vertikalen Bohrung gelagert und gegebenenfalls axial gesichert ist. Dabei kann der Durchmesser des Steckbolzens des lösbaren Aufsatzstückes dem Durchmesser eines Haltebolzens eines pfannenartigen, unmittelbar am Hubarm angeordneten Angriffselementes für kugel-oder halbkugelförmige Angriffsteile an Flugzeugfahrwerken entsprechen. Somit können diese beiden unterschiedlichen Angriffsteile, nämlich das erfindungsgemäße Aufsatzstück oder das schon bekannte Angriffselement gegeneinander ausgetauscht werden. Dies ist vor allem auch dann vorteilhaft, wenn beispielsweise am Bugfahrwerk wegen der dort herrschenden Platzverhältnisse ein bolzenartiges Angriffsteil höher als die Fahrzeugachse vorgesehen ist und deshalb der Stoßdämpfer beim Anheben blockiert werden muß, während beispielsweise an den Hauptfahrwerken kugelförmige Angriffsteile unmittelbar am Fahrwerk vorhanden sind, bei welchem die Anhebekräfte somit unmittelbar auf den oder die Stoßdämpfer übertragen werden.

Der Benutzer kann dann ein und denselben Radwechsel-Heber benutzen und braucht lediglich die Angriffsteile auszutauschen, wobei diese relativ leichtgängig in vertikalen Bohrungen des Hubarmes stecken können, so daß das Austauschen ganz einfach ist. Selbstverständlich wird dadurch auch erreicht, daß der Radwechsel-Heber einerseits bei speziellen Fahrwerken, andererseits aber auch bei den üblichen Fahrwerken anderer Flugzeuge eingesetzt werden kann, sofern der Hubweg des Hubarmes entsprechend bemessen ist.

Diese mehrfache Verwendbarkeit des Radwechsel-Hebers kann noch erleichtert sein, wenn er neben der Lochung zur Aufnahme des Steckbolzens für das Aufsatzstück eine gleich große Vorratslochung zur Aufnahme eines zweiten Angriffselementes mit halbkugelförmiger Aussparung aufweist, weil dann die beiden verschiedenen Angriffselemente jederzeit sofort zur Hand sind.

Ein pfannenförmiges Angriffselement kann sich selbsttätig auch bei Schräglage des Hebers und/oder des Flugzeuges an das kugelförmige Angriffsteil anpassen. Um eine entsprechende Anpaßbarkeit auch bei der erfindungsgemäßen Ausbildung eines Aufsatzstückes insbesondere mit zwei parallelen Lasthaken zu ermöglichen, kann das Aufsatzstück eine in Gebrauchsstellung vorzugsweise etwa horizontal liegende Bohrung aufweisen, die von einem die Lasthaken tragenden Drehbolzen axial und drehbar durchsetzt ist, wobei die Drehachse etwa rechtwinklig zu dem vertikalen Steckbolzen verläuft. Somit können die beiden Haken um diese horizontale Achse etwas verschwenkt werden, um Schräglagen auszugleichen. Darüberhinaus können sie auch um den horizontalen Steckbolzen etwas verschwenkt werden, falls der Radwechsel-Heber etwas schräg gegen das Fahrwerk hin geschoben worden sein sollte, so daß ein mehrfaches Rangieren des Radwechsel-Hebers vermieden werden kann.

Am Ende des Hakenvorsprunges des Blockierhakens kann ein in Gebrauchsstellung nach oben gerichteter Arretiervorsprung zum Eingreifen in ein Halterohr od.dgl. der Kolbenstange des Stoßdämpfers vorgesehen sein. In der Regel befindet sich die Kolbenstange des Stoßdämpfers in einem derartigen Halterohr, welches nach unten etwas vorsteht, so daß der Arretiervorsprung des Randes dieses Rohres umgreifen und somit Formschluß auch in Querrichtung herstellen kann. Dies erhöht die Sicherheit beim Blockieren des Stoßdämpfers.

Es sei noch erwähnt, daß der Abstand zwischen Lasthaken und Blockierhaken dem Abstand des Angriffsteiles des Fahrwerkes von der Unterkante der Kolbenstange des Stoßdämpfers in einer Position entspricht, die diese Kolbenstange unter der Belastung durch das Flugzeuggewicht einnimmt. Somit blockiert der Blockierhaken den Stoßdämpfer in einer Position, in welcher er auch stehen würde, wenn der Angriffsteil des Fahrwerkes unmittelbar an einem Teil angreifen würde, das von dem Stoßdämpfer beaufschlagt ist. Dennoch kann in vorteilhafter Weise das Angriffsteil des Fahrwerkes außerhalb und insbesondere höher als die Fahrwerkachse angeordnet sein, beispielsweise bei einem Bugfahrwerk mit einem Angriffspunkt für eine Zugvorrichtung übereinstimmen.

Um beim Absenken des Hubarmes und des Angriffselementes ein selbsttätiges Abknicken des Blockierhakens zu erreichen, ist es vorteilhaft, wenn die Rück-oder Unterseite des Blockierhakens gegenüber dem eigentlichen Hakenverlauf abgeschrägt oder gerundet ist, so daß beim Absenken des Angriffselementes mit dem Blockierhaken dessen unterer Teil bei Bodenkontakt selbsttätig um das Gelenk und zunächst gegen die Kraft der Zugfeder und dann mit deren Unterstützung in eine horizontale Position des unteren Blockierhakenteiles schwenkbar und in dieser Position durch die Kraft der angreifenden Feder festlegbar ist. Dies erlaubt es einer Bedienungsperson, auch ein stark abgesenktes Fahrwerk, beispielsweise mit platten Reifen zu unterfahren, ohne besondere Vorkehrungen und Manipulationen an dem Blockierhaken durchführen zu müssen. Dennoch gelangt dieser mit seinem nach oben stehenden Hakenvorsprung selbsttätig unter die untere Rohröffnung der Stoßdämpferstange, so daß beim späteren Anheben der Blockierhaken selbsttätig in seine Gebrauchsstellung gelangt.

Dabei ist es zweckmäßig, wenn das Gelenk des Blockierhakens neben der Arretierung in gestreckter Position auch einen Anschlag für die abgeknickte Position hat, in welcher der den Hakenvorsprung aufweisende Teil des Blockierhakens vorzugsweise etwa horizontal orientiert ist. Ein stärkeres Abknicken wäre nämlich beim selbsttätigen Unterfahren des abgesenkten Endes des Stoßdämpfers allenfalls hinderlich.

Insgesamt ergibt sich vor allem bei Kombination einzelner oder mehrerer der vorbeschriebenen Merkmale und Maßnahmen ein Radwechsel-Heber für Flugzeuge, der in bisheriger und vorteilhafter Weise mobil ist und dennoch auch relativ niedrige Fahrwerke, beispielsweise spezielle Bugfahrwerke unterfahren und anheben kann, bei denen das oder die Angriffsteile außerhalb der Fahrwerkachse und insbesondere höher als diese liegen und beispielsweise mit dem Angriffspunkt für eine Zugvorrichtung für das gesamte Flugzeug übereinstimmen, ohne daß separate Teile zum Blockieren des Stoßdämpfers dieses Fahrwerkes benötigt werden, die in Blockierstellung vergessen werden könnten. Bei dem erfindungsgemäßen Radwechsel-Heber wird nämlich beim Absenken des vorzugsweise hakenförmigen Angriffselementes der mit diesem verbundene Blockierhaken ebenfalls von selbst abgesenkt, notfalls bei zu geringer Bodenfreiheit auch noch abgeknickt, so daß er problemlos und unter sofortiger und völliger Freigabe des Stoßdämpfers von dem Fahrwerk wieder weggefahren werden kann, wenn die daran erforderlichen Montagearbeiten erledigt sind. Neben der Vermeidung loser Teile oder Vorrichtungen, deren Anbringung einen entsprechenden zusätzlichen Aufwand bedeuten würde, ergibt sich außerdem, daß der Radwechsel-Heber von einer einzige Person positioniert und bedient werden kann.

Nachstehend ist die Erfindung mit ihren ihr als wesentlich zugehörenden Einzelheiten anhand der Zeichnung noch näher beschrieben. Es zeigt in zum Teil schematisierter Darstellung:

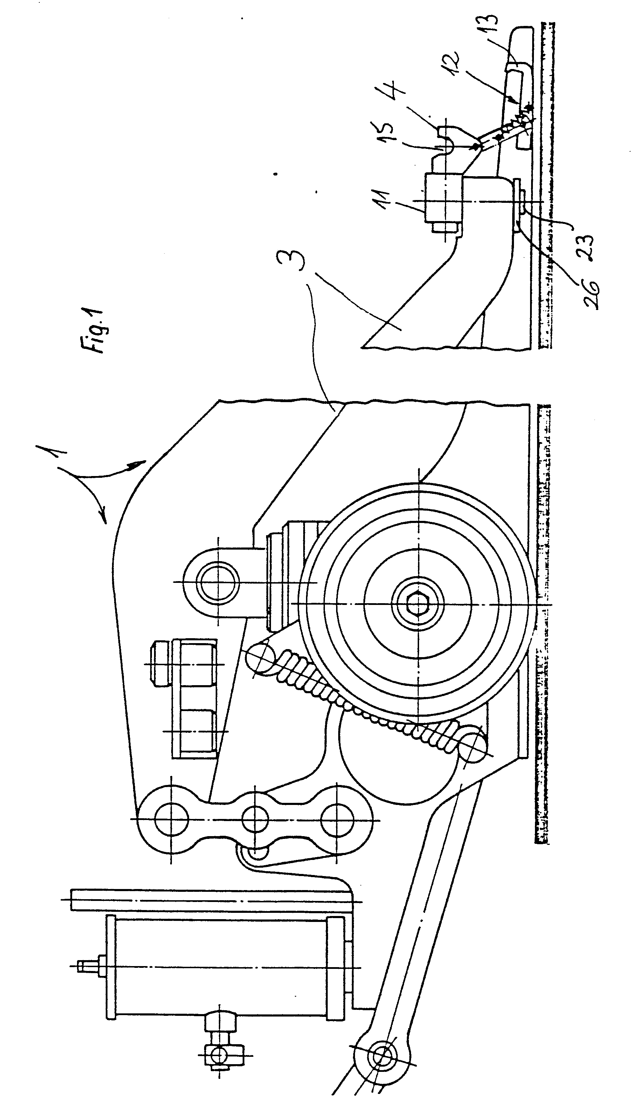

Fig. 1 eine Seitenansicht eines Radwechsel-Hebers für Flugzeuge mit einem als Aufsatzstück ausgebildeten Angriffselement und einer daran befindlichen Blockiervorrichtung für einen Stoßdämpfer,

Fig. 2 in vergrößertem Maßstab eine Seitenansicht des Angriffselementes mit einem sich in gestreckter Schräglage befindlichen Blockierhaken,

Fig. 3 eine der Fig.2 entsprechende Seitenansicht des Angriffselementes, wobei der Blockierhaken um ein mittleres Gelenk abgeknickt ist,

Fig. 4 eine Stirnansicht des Angriffselementes gem.Fig.2,

Fig. 5 ein zum Austausch gegen das Angriffselement gemäß den Fig. 2 bis 4 geeignetes Angriffselement mit einer abgewandelten Angriffsstelle zur Anpassung an ein abgewandeltes Angriffsteil an einem Flugzeug-Fahrwerk,

Fig. 6 ein Flugzeug mit einem Bugfahrwerk und Hauptfahrwerken, die jeweils unterschiedliche Angriffsteile haben,

Fig. 7 ein Bugfahrwerk des Flugzeuges gemäß Fig. 6 mit platten Reifen und das Angriffselement des Radwechsel-Hebers beim Einfahren unter das Fahrwerk,

Fig. 8 eine der Fig.7 entsprechende Darstellung, wobei sich das Angriffselement unmittelbar vor der Verbindung mit den entsprechenden Angriffsteilen des Fahrwerkes befindet,

Fig. 9 das Angriffselement mit Blockiervorrichtung in Gebrauchsstellung bei angehobenem Fahrwerk und blokkiertem Stoßdämpfer,

Fig.10 ein Fahrwerk, bei welchem nur einer der beiden Reifen platt ist, bevor das Angriffselement des Radwechsel-Hebers in Gebrauchsstellung ist,

Fig. 11 eine Seitenansicht des Radwechsel-Hebers nach dem Austausch des Angriffselementes, wobei nun ein Angriffselement gemäß Fig. 5 eingesetzt ist, beim Angriff an einem Hauptfahrwerk des Flugzeuges gemäß Fig. 6 mit plattem Reifen,

Fig. 12 eine der Fig. 11 entsprechende Darstellung nach dem Anheben des Fahrwerkes sowie

Fig. 13 und 14 eine abgewandelte Ausführungsform des Angriffselementes analog den Fig. 2 und 3.

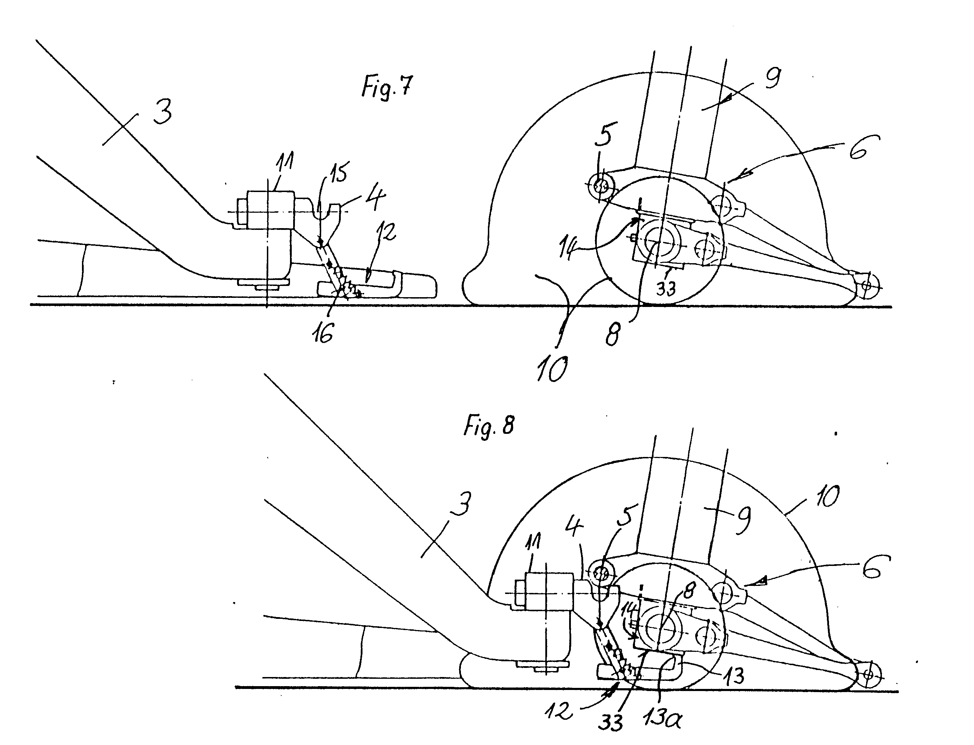

Ein im ganzen mit 1 bezeichneter Radwechsel-Heber, im folgenden auch Heber 1 genannt, für Flugzeuge 2 hat einen hydraulisch hochschwenkbaren Hubarm 3, der ein im ganzen mit 4 bezeichnetes Angriffselement zum Untergreifen eines entsprechenden Angriffsteiles 5 an dem oder den Fahrwerken 6 oder 7 des Flugzeuges 2 aufweist. Dabei ist in Fig. 6 das Bugfahrwerk mit 6 und das Hauptfahrwerk mit 7 bezeichnet. Das als Beispiel dargestellte Flugzeug 2 ist dabei ein propellergetriebenes kleineres Passagierflugzeug des Typs ATR 42 der Firma Aerospatiale.

Gemäß den Fig. 7 bis 10 befindet sich der Angriffsteil 5 des Fahrwerkes 6 außerhalb der Achse 8 dieses Fahrwerkes 6 und vor allem höher als diese Achse 8, so daß beim Angriff des Angriffselementes 4 des Hubarmes 3 der zum Fahrwerk 6 gehörende Stoßdämpfer 9 nicht erfaßt wird, also beim Anheben durch d ie Entlastung ausfahren könnte, so daß sich die Räder 10 nicht oder nicht genügend früh vom Boden abheben lassen, wie dies beim Fahrwerk 7 dadurch ohne weiteres erreichbar ist, weil die Anhebekräfte bei diesem Fahrwerk 7 vom Angriffsteil 29 auch auf den dortigen Stoßdämpfer 9 übertragen werden und diesen beim Anheben in gespannter Lage halten.

Für den Angriff an einer außerhalb der Achse 8 des Fahrwerkes 6 befindlichen Angriffsteil 5 ist im Ausführungsbeispiel deshalb ein Aufsatzstück 11 mit dem zu dem Angriffsteil 5 passenden Angriffselement 4 an dem Hubarm 3 oder Hubrüssel des Hebers 1 vorgesehen und weist zusätzlich eine an ihm befestigte, im ganzen mit 12 bezeichnete Blockiervorrichtung 12 für den Stoßdämpfer 9 des Fahrwerkkes 6 auf. Der Benutzer des Hebers 1 hat also dadurch die Möglichkeit, ohne separate Hilfsmittel den Stoßdämpfer 9 beim Anheben des Fahrwerkes 6 so zu blockieren, daß die Räder 10 schnell vom Boden freikommen. Da die Blockiervorrichtung 12 an dem speziellen Angriffselement 4 befestigt ist, kann sie auch beim Lösen des Hebers 1 vom Fahrwerk 6 nicht vergessen werden, so daß nach Montagearbeiten der Stoßdämpfer 9 nicht versehentlich blockiert bleibt.

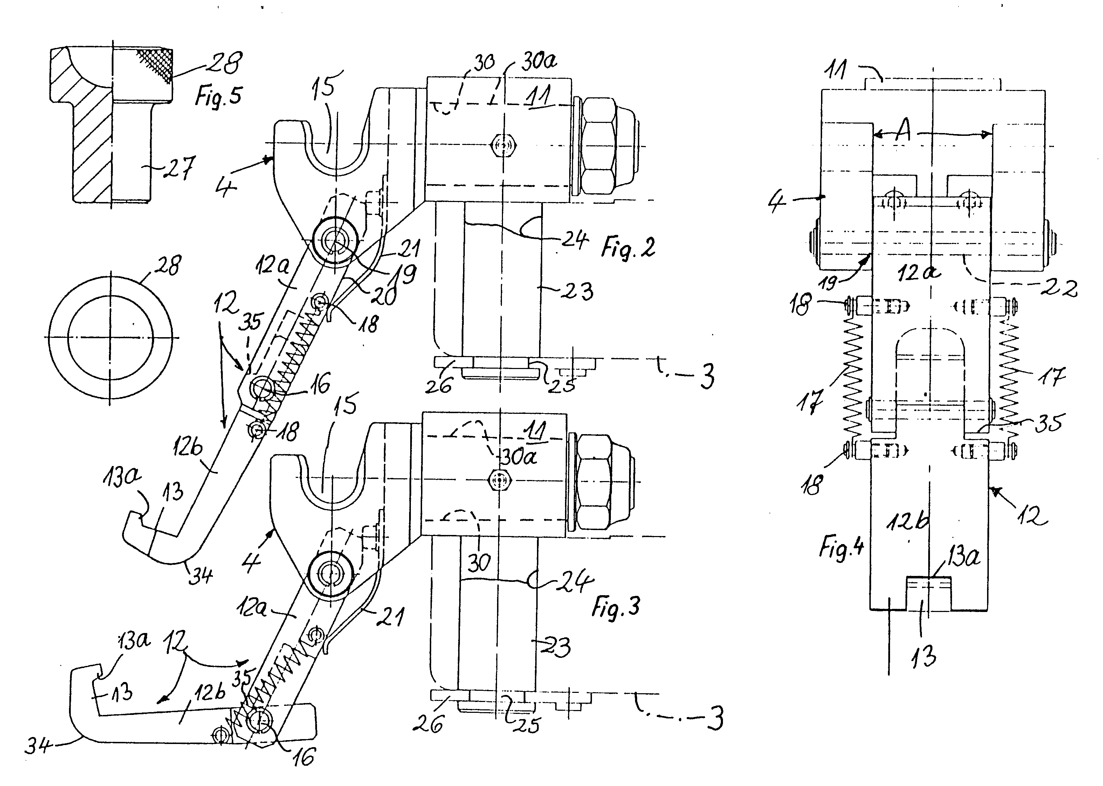

Vor allem in den Fig. 2 bis 4 ist das Aufsatzstück 11 mit dem noch zu beschreibenden Angriffselement 4 und der Blokkiervorrichtung 12 näher dargestellt. Dabei erkennt man, - wie auch in den folgenden Figuren, die die Funktionsweise vor allem auch der Blockiervorrichtung 12 zeigen -daß die Blockiervorrichtung 12 für den Stoßdämpfer 9 ein am Angriffselement 4 bzw. an dem Aufsatzstück 1 schwenkbar angelenkter Blockierhaken ist, der deshalb im folgenden ebenfalls mit "12" bezeichnet wird, welcher mit seinem Hakenvorsprung 13 das am Fahrwerk 6 bzw. der Räderlagerung angreifende untere, ausfahrbare Teil 14 des Stoßdämpfers 9 - im Ausführungsbeispiel formschlüssig - untergreifen kann, wie es vor allem anhand der Fig. 8 und 9 noch näher erläutert wird.

Das Angriffselement 4 zum Untergreifen des außerhalb der Fahrwerkachse 8 befindlichen, vorzugsweise bolzenartigen Angriffsteiles 5 ist als Lasthaken ausgebildet, welcher deshalb im folgenden ebenfalls mit "4" bezeichnet wird.

Unter dessen nach oben offener Hakenöffnung 15 ist gemäß den Figuren 2 bis 4 der Blockierhaken 12 für den Stoßdämpfer 9 schwenkbar befestigt.

Vor allem in den Figuren 3, 8 u.10 erkennt man eine besonders zweckmäßige Ausbildung des Blockierhakens 12, die gem. Figur 7 u.8 das Unterfahren des ausfahrbaren Teiles 14 des Stoßdämpfers 9 selbst dann erlaubt, wenn beide Räder 10 des Fahrwerkes 6 platt sind. Der Blockierhaken 12 ist demgemäß in seiner Längsrichtung durch ein gegenüber der gestreckten Lage gemäß Fig.2 in Richtung des Hakenvorsprunges 13 wirksames Gelenk 16 unterteilt. Die beiden beidseits des Gelenkes 16 befindlichen Teile 12a und 12b des Blockierhakens 12 sind durch eine oder zwei im Ausführungsbeispiel Zugkräfte erzeugende Feder, also eine Zugfeder 17, verbunden, wobei eine Verbindungslinie der beiden Befestigungsstellen 18 der Zugfeder 17 bei gestrecktem Haken 12 gemäß Fig. 2 auf der der Klapprichtung bzw. dem Hakenvorsprung 13 abgewandten Seite des Gelenkes 16 angeordnet ist. Die Zugfeder 17 ist also über den äußersten Schwenkpunkt beim Aufklappen des Blockierhakens 12 hinwegverschwenkt, so daß sie diese Position der Fig. 2 gegen ihre Federkraft festhält. Wird jedoch der Hakenteil 12b um das Gelenk 16 gegenüber dem Hakenteil 12a in Richtung des Hakenvorsprunges 13 verschwenkt, wie Fig.3 es zeigt, gelangt die Feder 17 auf die andere Seite des Gelenkes 16, so daß sie auch diese Position festlegen kann. Darüberhinaus kann die Feder 17 nach dem Überwinden des äußersten Schwenkpunktes beim Hochschwenken des unteren Hakenteiles 12b dessen Schwenkbewegung selbsttätig vollenden, so daß ein Absenken des Hubarmes 3 mit dem gestreckten Blockierhaken 12 zu einem selbsttätigen Hochklappen des unteren Hakenteiles 12b führt. Dies ist für eine weitgehende automatische Einhängung am Fahrwerk und vor allem dem unteren Teil 14 des Stoßdämpfers 9 vorteilhaft.

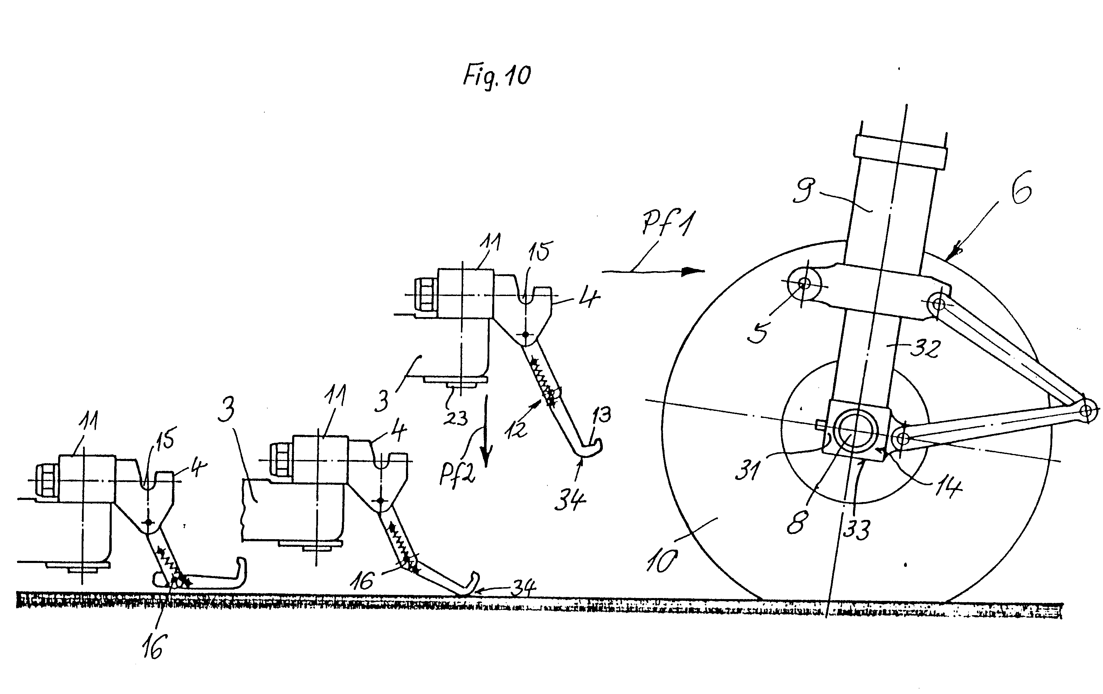

In den Figuren 2 u.3 erkennt man außerdem, daß der Blockierhaken 12 an seiner ihn schwenkbar machenden Anlenkstelle 19 an dem als Angriffselement 4 dienenden Lasthaken gegen eine an der seinem Hakenvorsprung 13 abgewandten Rückseite 20 und dabei an der Rückseite 20 des oberen Teiles 12a angreifende Stützfeder 21 gegen deren Federkraft abgestützt und von dieser in einer solchen schrägen Ausgangslage gehalten ist, daß der Hakenvorsprung 13 in Orientierungsrichtung des Hubarmes 3 und somit in Fahrtrichtung des Hebers 1 beim Unterfahren des Fahrwerkes 6 gemäß dem Pfeil Pf 1 in Fig.10 vor der Anlenkstelle 19 des Blockierhakens 12 und dabei tiefer als diese angeordnet ist. Dadurch ist also der Hakenvorsprung 13 in Ausgangslage bei gestrecktem Blockierhaken 12 am weitesten in Fahrtrichtung nach vorne orientiert.

Die Stützfeder 21 für den Blockierhaken 12 ist im Ausführungsbeispiel eine im Bereich des Schwenklagers bzw. der Anlenkstelle 19 des Blockierhakens 12 an dem Angriffselement 4 fixierte Blattfeder, die entsprechend platzsparend und dennoch wirksam montiert sein kann.

Gemäß Fig.4 sind im Ausführungsbeispiel sogar zwei parallele Lasthaken mit Abstand A zueinander vorgesehen und der Blockierhaken 12 ist im Zwischenraum der beiden Haken unterhalb der Hakenöffnung 15 schwenkbar befestigt, wobei man in Fig. 4 den Schwenkbolzen 22 deutlich erkennt.

Das Aufsatzstück 11 mit dem oder den Lasthaken 4 ist an dem Hubarm 3 des Radwechsel-Hebers 1 lösbar mittels eines Steckbolzens 23 in einer etwa vertikalen Bohrung 24 gelagert und im Ausführungsbeispiel mit Hilfe einer Nut 25 und einer in diese eingreifende Ringfeder 26 axial gesichert. Durch Ausrasten der Ringfeder 26 aus der Nut 25 wird der Steckbolzen 23 an seinem unteren Ende freigegeben, so daß das gesamte Aufsatzstück 11 mit dem Lasthaken 4 und dem Blockierhaken 12 aus der vertikalen Bohrung 24 des Hubarmes 3 herausgezogen werden kann. Da die Belastung des Aufsatzstückes 11 in erster Linie in Richtung dieses Steckbolzens 23 nach unten gerichtet ist, könnte auf die axiale Sicherung des Steckbolzens 23 gegebenenfalls sogar verzichtet werden.

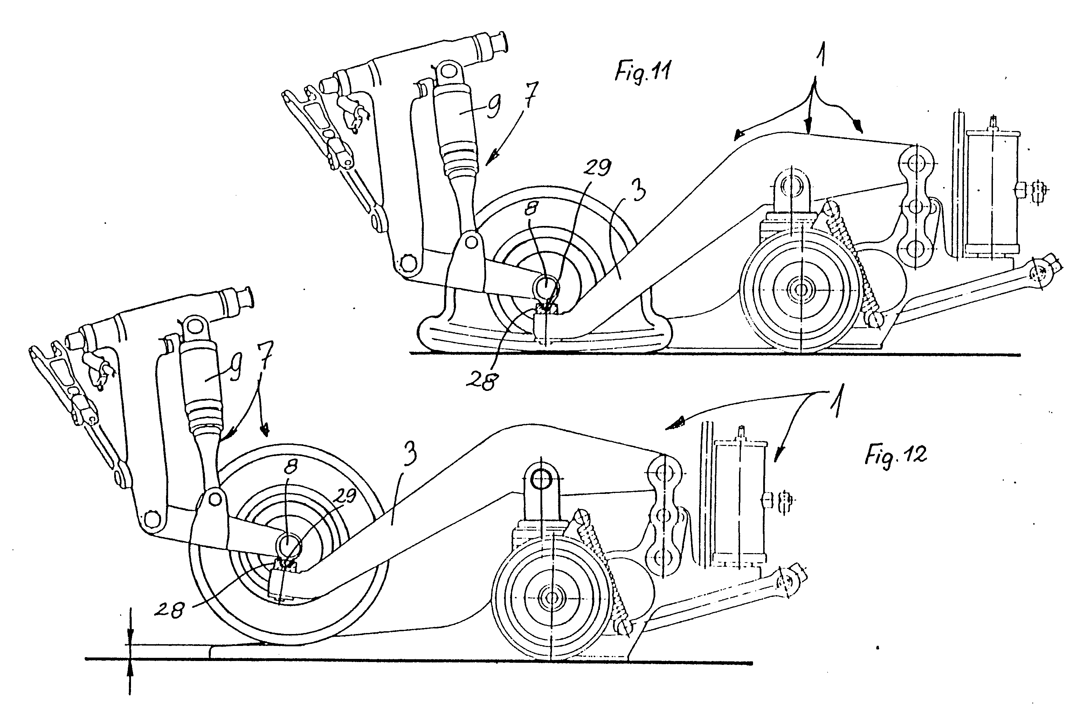

Wie ein Vergleich der Fig.2 u.5 verdeutlicht, entspricht der Durchmesser des Steckbolzens 23 des lösbaren Aufsatzstückes 11 im Ausführungsbeispiel dem Durchmesser eines Haltebolzens 27 eines pfannenartigen Angriffselementes 28 für kugel-oder halbkugelförmige Angriffsteile 29, wie sie bei einem Fahrwerk 7 gemäß den Fig.11 u.12 vorgesehen sein können.

Die erfindungsgemäße Ausgestaltung erlaubt es also, das Aufsatzstück 11 zu lösen und durch ein Angriffselement 28 zu ersetzen, wonach gemäß den Fig. 11 u.12 mit dem Heber 1 ein Fahrwerk 7 angehoben werden kann, bei welchem der Stoßdämpfer 9 durch dieses Anheben gleichzeitig in seiner Lage blockiert bleibt, weil das Angriffsteil 29 unmittelbar im Bereich der Fahrwerkachse angeordnet ist.

Gemäß den Fig. 2 u.3 weist das Aufsatzstück 11 mit dem erfindungsgemäßen Blockierhaken 12 eine in Gebrauchsstellung etwa horizontal liegende Bohrung 30 auf, die von einem die Lasthaken 4 tragenden Drehbolzen 30a axial und drehbar durchsetzt ist, wobei die Drehachse dieses Drehbolzens 31 etwa rechtwinklig zu dem vertikalen Steckbolzen 23 verläuft. Dies erlaubt eine gute Anpassung der Lasthaken 4 an Schräglagen des Bodens oder des Fahrwerkes - sei es bei Bodenunebenheiten, sei es, weil eines der beiden Räder 10 des Fahrwerkes 6 platt ist oder einen verminderten Luftdruck aufweist - wobei die beiden Lasthaken aus ihrer in Fig. 4 erkennbaren genau horizontal liegenden Flucht-Lage um den horizontalen Drehbolzen 30a etwa verschwenkt werden können. Zusätzlich können sie auch um den vertikalen Drehbolzen 23 verschwenkt werden, um auch bei einer etwas schrägen Anfahrt des Hebers 1 relativ zu den Angriffsstellen des Fahrwerkes 6 diese beiden erfassen zu können.

Am Ende des Hakenvorsprunges 13 des Blockierhakens 12 erkennt man einen in Gebrauchsstellung nach oben gerichteten Arretiervorsprung 13a, der in ein Halterohr 31 der Kolbenstange 32 des Stoßdämpfers 9 eingreifen kann. Diese Gebrauchslage ist vor allem in Fig.10 erkennbar, wo dieser Arretiervorsprung 30 deshalb nicht sichtbar ist, weil er in das entsprechende Rohrstück eingreift bzw. einen entsprechenden, nach innen offenen Rand der Halterung der Kolbenstange 32 des Stoßdämpfers 9 umgreift. Auf diese Weise ergibt sich am Blockierhaken 12 in der Blockierposition Formschluß, der die Blockierung besonders sicher macht. Dabei entspricht der Abstand zwischen Lasthaken 4 und dem Hakenvorsprung 13 des Blockierhakens 12 dem Abstand des Angriffsteiles 5 des Fahrwerkes 6 von der Unterkante 33 der Kolbenstange 32 des Stoßdämpfers 9 in einer solchen Position, die diese Kolbenstange 32 unter der Belastung durch das Flugzeuggewicht auch einnimmt. Man erkennt dies deutlich beim Vergleich der Fig.9 u.10, wobei Fig. 10 die durch das Flugzeuggewicht belastete Kolbenstange zeigt und diese auch im angehobenen Zustand der Fig.9 etwa gleich weit nach unten vorsteht. Während des Anhebens und des Absenkens wird also in wirkungsvoller Weise die Kolbenstange 32 gegen ein weiteres Ausfahren blockiert, obwohl das Angriffsteil 5 dieses Fahrwerkes 6 nicht an einem von der Kolbenstange 32 beaufschlagten Teil des Fahrwerkes vorgesehen ist, wie dies bei dem Fahrwerk 7 gemäß den Fig. 11 u.12 der Fall ist.

Die Rück-oder Unterseite 34 des Blockierhakens 12 ist gegenüber dem Verlauf des Hakenvorsprunges 13 abgeschrägt oder abgerundet, so daß beim Absenken des Angriffselementes 4 mit dem Blockierhaken 12 dessen unterer Teil 12b gemäß der Darstellung der Fig.10 bei Bodenkontakt selbsttätig um das Gelenk 16 in eine etwa horizontale Position des unteren Blockierhakenteiles 12b schwenkbar und in dieser Position - wie bereits erwähnt - durch die Kraft der angreifenden Feder 17 zunächst festgelegt ist. Wird also gemäß Fig.10 das freie Ende des Hubarmes 3 gemäß dem Pfeil Pf 2 nach unten verschwenkt, gelangt der zunächst gestreckte untere Teil 12b des Blockierhakens 12 mit der erwähnten abgerundeten oder abgeschrägten Unterseite im Bereich des Hakenvorsprunges 13 in Bodenkontakt und wird beim weiteren Absenken aufgrund seiner schrägen Ausgangslage umgeknickt, wobei die Feder 17 über den Gelenkpunkt verschwenkt wird und dann die in Fig.10 am weitesten links und am weitesten unten dargestellte Position bewirkt. In dieser Position kann dann gemäß Fig. 7 auch ein Fahrwerk 6 unterfahren werden, bei welchem beide Räder 10 platt sind. Dabei hat das Gelenk 16 des Blockierhakens 12 neben der Arretierung in gestreckter Position auch einen Anschlag 35 für die abgeknickte Position, in welcher der den Hakenvorsprung 13 aufweisende Teil 12b des Blockierhakens 12 in etwa horizontaler Position orientiert ist.

Vor allem anhand der Fig.8 erkennt man deutlich, daß in dieser Position der Blockierhaken 12 mit seinem nach oben weisenden Hakenvorsprung 13 bereits unter das untere stirnseitige Ende der Kolbenstange 32 ragt, wenn die Hakenöffnungen 15 gerade unterhalb der entsprechenden Angriffsteile 5 des Fahrwerkes 6 positioniert sind. Wird nun aus dieser in Fig.8 dargestellten Position der Hubarm 3 nach oben bewegt, greifen die Hakenöffnungen 15 an den Angriffsteilen 5 in der gewünschten Weise von unten her an, um somit das auf diesem Fahrwerk 6 ruhende Gewicht aufzunehmen und das Fahrwerk 6 anzuheben. Dabei wird nun zunächst der Abstand des Angriffsteiles 5 vom Boden so lange vergrößert, bis das zunächst platte Rad freikommt, bevor es dann angehoben wird. Solange kann die Kolbenstange 32 noch aus dem Stoßdämpfer 9 nach unten ausfahren, wobei durch diese Relativbewegung der untere Hakenteil 12b aus seiner horizontalen Position um das Gelenk 16 nach unten verschwenkt wird. Dabei greift weiterhin der Hakenvorsprung 13 und sein Arretiervorsprung 30 unter den nach innen bereichsweise offenen Rand 33 dieser Kolbenstange 32 oder ihrer Befestigung, so daß der selbsttätig seine Blockierstellung gemäß Fig.9 erreicht. Somit genügt eine Bedienungsperson zur Betätigung des Hebers 1. Sowohl für die Ausgangslage gemäß Fig.10 als auch die Ausgangslage gemäß Fig.7 u.8 werden also spezielle separate Blockierteile für den Stoßdämpfer 9 und dessen Kolbenstange 32 vermieden, obwohl der Heber 1 und sein Hubarm 3 über die Lasthaken 4 an einem Angriffsteil 5 angreifen, welches außerhalb der Fahrwerkachse 8 und auch höher als diese angeordnet ist und in vorteilhafter Weise gleichzeitig als Anhängepunkt für eine Zugvorrichtung dienen kann, wenn das Fahrwerk 6 ein Bugfahrwerk ist.

Es sei noch erwähnt, daß der Radwechsel-Heber 1 neben der vertikalen Lochung oder Bohrung 24 zur Aufnahme des Steckbolzens 23 für das Aufsatzstück 11 eine gleichgroße, in der Zeichnung nicht näher dargestellte Vorratslochung zur Aufnahme des zweiten Angriffselementes 28 mit der halbkugelförmigen Aussparung gemäß Fig. 5 aufweisen kann, damit der Benutzer den Heber 1 sehr schnell dazu umrüsten kann, auch ein Fahrwerk 7 gemäß den Fig. 11 u.12 anheben zu können, ohne dabei aufwendige zusätzliche Adapter-Teile zu benötigen.

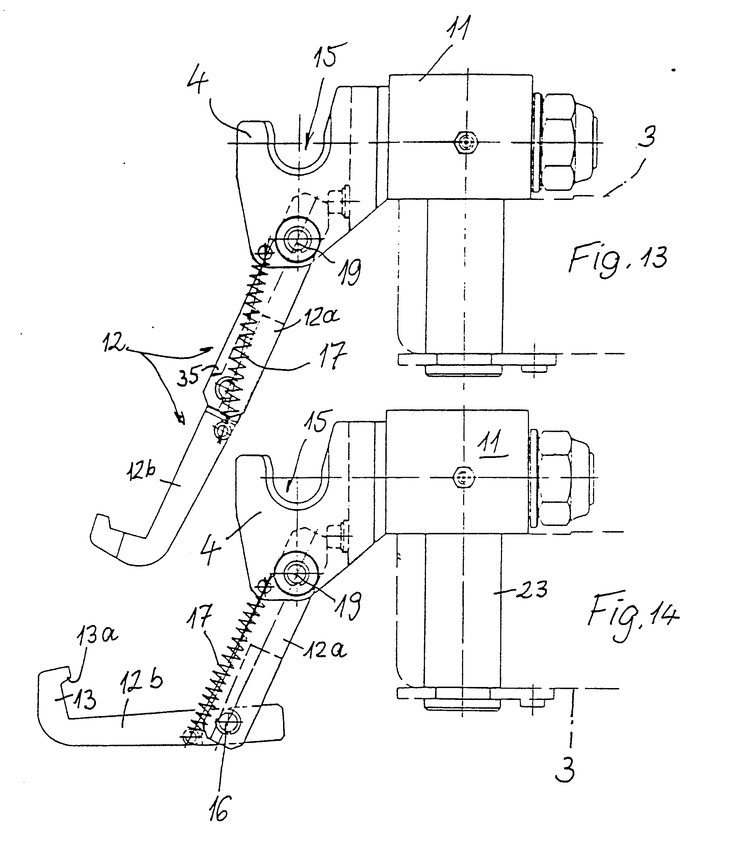

In den Fig. 13 u.14 ist noch einmal eine Seitenansicht des Angriffselementes 4 einerseits mit gestrecktem Blockierhaken 12 und andererseits mit abgeknicktem Blockierhaken 12 dargestellt. Dabei ist in diesem Falle die Zugfeder 17 etwas anders angeordnet, wodurch es möglich ist, die Blattfeder 21 einzusparen und deren Funktion ebenfalls durch die Zugfeder 17 auszuführen. Die Zugfeder 17 ist dabei einerseits - wie in den Fig. 2 u. 3 - an dem unteren Teil 12b des Blockierhakens 12 und andererseits an dem Angriffselement 4 bzw. dem Aufsatzstück 11 befestigt. Sie wirkt somit einerseits in der vorbeschriebenen Weise zum Festhalten der gestreckten ·Position oder als Unterstützung beim Abknicken des Blockierhakens 12.

Da die Zugfeder 17 gemäß den Fig. 13 u.14 an dem Angriffselement 4 in Orientierungsrichtung des Hubarmes 3 vor der Anlenkstelle 19 des Blockierhakens 12 befestigt ist, bewirkt die Zugfeder 17 außerdem die Schrägstellung des Blockierhakens 12 in der dargestellten und vorbeschriebenen Weise, ohne daß es zusätzlich der Stützfeder 21 bedarf. Somit stellt diese Ausführungsform noch eine weitere Vereinfachung des gesamten Aufsatzstückes 11 dar.

Insgesamt ergibt sich so ein Heber 1, der auch unterschiedliche Fahrwerkzeuge 6 und 7 beaufschlagen kann, ohne daß jeweils fahrwerksseitig spezielle Vorkehrungen getroffen werden müssen, die beim Zurückfahren des Hebers 1 wieder rückgängig gemacht werden müssen und dabei vergessen werden könnten.

Es sei noch erwähnt, daß der Blockierhaken 12 auswechselbar sein kann. Dadurch ist eine Anpassung an unterschiedliche Abmessungen von solchen Fahrwerken 6 möglich.

Alle in der Beschreibung, der Zusammenfassung, den Ansprüchen und der Zeichnung dargestellten Merkmale und Konstruktionsdetails können sowohl einzeln als auch in beliebiger Kombination miteinander wesentliche Bedeutung haben.

## Ansprüche

1. Radwechsel-Heber (1) für Flugzeuge (2) mit einem Hubarm (3) od.dgl., der ein Angriffselement (4) zum Untergreifen eines außerhalb der Achse (8) des Fahrwerkes (6) befindlichen Angriffsteiles (5) an dem/den Fahrwerk(en) (6,7) des Flugzeuges (2) aufweist, **dadurch gekennzeichnet,** daß für den Angriff an dem den nicht gefederten Teil des Fahrwerkes beaufschlagenden Angriffsteil (5) ein Aufsatzstück (11) mit dem zu dem Angriffsteil (5) passenden Angriffselement (4) an dem Hubarm (3) oder Hubrüssel vorgesehen ist und daß das Angriffselement (4) zusätzlich eine an ihm befestigte Blockiervorrichtung (12) für den Stoßdämpfer (9) des Fahrwerkes (6) aufweist.

2. Radwechsel-Heber nach Anspruch 1, dadurch gekennzeichnet, daß die Blockiervorrichtung (12) für den Stoßdämpfer (9) ein am Angriffselement (4) vorzugsweise schwenkbar angelenkter Blockierhaken od.dgl. ist, der mit seinem Hakenvorsprung (13) das am Fahrwerk (6) bzw. der Räderlagerung angreifende untere, ausfahrbare Teil (14) des Stoßdämpfers (9) insbesondere formschlüssig untergreift.

3. Radwechsel-Heber nach Anspruch 1 oder 2, dadurch gekennzeichnet, daß das Angriffselement (4) zum Untergreifen eines außerhalb der Fahrwerkachse (8) befindlichen bzw. bolzenartigen Angriffsteiles (5) als Lasthaken ausgebildet ist, unter dessen nach oben offener Hakenöffnung (15) der Blockierhaken (12) für den Stoßdämpfer (9) befestigt ist.

4. Radwechsel-Heber nach einem der Ansprüche 1 bis 3, dadurch gekennzeichnet, daß der Blockierhaken (12) in seiner Längsrichtung wenigstens einmal durch ein gegenüber der gestreckten Lage in Richtung des Hakenvorsprunges (13) wirksames Gelenk (16) unterteilt ist.

5. Radwechsel-Heber nach einem der Ansprüche 1 bis 4, dadurch gekennzeichnet, daß die beiden beidseits des Gelenkes (16) befindlichen Teile (12a, 12b) des Blockierhakens (12) durch eine Feder vzw. eine Zugfeder (17) od.dgl. verbunden sind, wobei eine Verbindungslinie der beiden Befestigungsstellen (18) der Zugfeder (17) bei gestrecktem Haken vzw. auf der der Klapprichtung abgewandten Seite des Gelenkes (16) angeordnet ist.

5. Radwechsel-Heber nach einem der Ansprüche 1 bis 5, dadurch gekennzeichnet, daß der Blockierhaken (12) an seiner Anlenkstelle (19) an dem als Angriffselement (4) dienenden Lasthaken od.dgl. gegen eine an der seinem Hakenvorsprung (13) abgewandten Rückseite (20), vorzugsweise des oberen Teiles (12a) angreifende Stützfeder (21) abgestützt und von dieser in einer solchen - schrägen Ausgangslage gehalten ist, daß der Hakenvorsprung (13) in Orientierungsrichtung des Hubarmes (3) vor der Anlenkstelle (19) des Blockierhakens (12) und tiefer als diese angeordnet ist.

7. Radwechsel-Heber nach einem der Ansprüche 1 bis 6, dadurch gekennzeichnet, daß die Stützfeder (21) für den Blockierhaken (12) eine im Bereich der Anlenkstelle (19) des Blockierhakens (12) an dem Angriffselement (4) fixierte Blattfeder ist.

8. Radwechsel-Heber nach einem der Ansprüche 1 bis 7, dadurch gekennzeichnet, daß zwei parallele Lasthaken mit Abstand (A) zueinander vorgesehen sind und der Blokkierhaken (12) im Zwischenraum der beiden Haken unterhalb deren Hakenöffnung vorzugsweuse schwenkbar befestigt ist.

9. Radwechsel-Heber nach einem der Ansprüche 1 bis 8, dadurch gekennzeichnet, daß das Aufsatzstück (11) mit dem Lasthaken (4) an dem Hubarm (3) des Radwechsel-Hebers (1) lösbar mittels eines Steckbolzens (23) etwa in einer vorzugsweise vertikalen Bohrung (24) gelagert und gegebenenfalls axial gesichert ist.

10. Radwechsel-Heber nach einem der Ansprüche 1 bis 9, dadurch gekennzeichnet, daß der Durchmesser des Steckbolzens (23) des lösbaren Aufsatzstückes (11) dem Durchmesser eines Haltebolzens (27) eines pfannenartigen Angriffselementes (28) für kugel-oder halbkugelförmige Angriffsteile (29) an Flugzeugfahrwerken (7) entspricht.

11. Radwechsel-Heber nach einem der Ansprüche 1 bis 10, dadurch gekennzeichnet, daß das Aufsatzstück (11) eine in Gebrauchsstellung vorzugsweise etwa horizontal liegende Bohrung (30) aufweist, die von einem die Lasthaken (4) tragenden Drehbolzen (30a) axial und drehbar durchsetzt ist, wobei die Drehachse etwa rechtwinklig zu dem vertikalen Steckbolzen (23) verläuft.

12. Radwechsel-Heber nach einem der Ansprüche 1 bis 11, dadurch gekennzeichnet, daß am Ende des Hakenvorsprunges (13) des Blockierhakens (12) ein in Gebrauchsstellung nach oben gerichteter Arretiervorsprung (13a) zum Eingreifen in ein Halterohr (31) od.dgl. der Kolbenstange (32) des Stoßdämpfers (9) vorgesehen ist.

13. Radwechsel-Heber nach einem der Ansprüche 1 bis 12, dadurch gekennzeichnet, daß der Abstand zwischen dem/den Lasthaken (4) und Hakenvorsprung (13) des Blockierhakens (12) dem Abstand des Angriffsteiles (5) des Fahrwerkes (6) von der Unterkante (33) der Kolbenstange (32) des Stoßdämpfers (9) in einer Position entspricht, die diese Kolbenstange (32) unter der Belastun̈g durch das Flugzeuggewicht einnimmt.

14. Radwechsel-Heber nach einem der Ansprüche 1 bis 13, dadurch gekennzeichnet, daß die Rück-oder Unterseite (34) des Blockierhakens (12) gegenüber dem Verlauf des Hakenvorsprunges (13) abgeschrägt oder gerundet ist, so daß beim Absenken des Angriffselementes (4) mit dem Blockierhaken (12) dessen unterer Teil (12b) bei Bodenkontakt selbsttätig um das Gelenk (16) in eine etwa horizontale Position des unteren Blockierhakenteiles (12b) schwenkbar und in dieser Position durch die Kraft der angreifenden Feder (17) festgelegt ist.

15. Radwechsel-Heber einem nach der Ansprüche 1 bis 14, dadurch gekennzeichnet, daß das Gelenk (16) des Blokkierhakens (12) neben der Arretierung in gestreckter Position auch einen Anschlag (35) für die abgeknickte Position hat, in welcher der den Hakenvorsprung (13) aufweisende Teil (12b) des Blockierhakens (12) vorzugsweise etwa horizontal orientiert ist.

16. Radwechsel-Heber nach einem der Ansprüche 1 bis 15, dadurch gekennzeichnet, daß er neben der Lochung (24) zur Aufnahme des Steckbolzens (23) für das Aufsatzstück (11) eine gleich große Vorratslochung zur Aufnahme eines zweiten Angriffselementes (28) mit halbkugelförmiger Aussparung aufweist.

17. Radwechsel-Heber nach einem der Ansprüche 1 bis 16, dadurch gekennzeichnet, daß die Zugfeder (17) einerseits an dem unteren Teil (12b) des Blockierhakens (12) und andererseits an dem Angriffselement (4) bzw. dem Aufsatzstück (11) befestigt ist.

18. Radwechsel-Heber nach einem der Ansprüche 1 bis 17, dadurch gekennzeichnet, daß die Zugfeder (17) an dem Angriffselement (4) in Orientierungsrichtung des Hubarmes (3) vor der Anlenkstelle (19) des Blockierhakens (12) befestigt ist.

19. Radwechsel-Heber nach einem der vorstehenden Ansprüche, dadurch gekennzeichnet, daß der Blockierhaken (12) auswechselbar ist.

Fig.1

0 252 428

E 87 338 MR *Hydro*

Fig.2

Fig.3

Fig.4

Fig.5

E 87 338 MR Hydro

Fig. 7

Fig. 8

E 87 338 MR Hydro

Fig.9

Fig.6

E 87 338 MR *Hydro*

Fig.10

F 87 338 MR Hydro

Fig.11

Fig.12

E 87 338 MR *Hydro*

0 252 428

Fig. 13

Fig. 14